# EUROPEAN PATENT SPECIFICATION

(11) **EP 2 440 395 B1**
(45) Date of publication and mention of the grant of the patent: **19.11.2014**
(21) Application number: 09787752.6
(22) Date of filing: 12.06.2009
(51) Int. Cl.: B29C 70/34, B29C 70/44, B29D 99/00

(54) **A METHOD OF MANUFACTURING STIFFENED PANELS MADE FROM COMPOSITE MATERIAL**
VERFAHREN ZUR HERSTELLUNG VERSTEIFTER PLATTEN AUS VERBUNDWERKSTOFF
PROCÉDÉ DE FABRICATION DE PANNEAUX RIGIDIFIÉS COMPOSÉS D'UN MATÉRIAU COMPOSITE

(43) Date of publication of application: 18.04.2012
(73) Proprietor: Alenia Aermacchi S.p.A., 00195 Roma (IT)
(72) Inventor: INSERRA IMPARATO, Sabato, I-80054 Gragnano (Napoli) (IT); DE VITA, Vincenzo, I-70031 Andria (Bari) (IT); IAGULLI, Gianni, I-71016 San Severo (Foggia) (IT)
(74) Representative: Fioravanti, Corrado
(86) International application number: PCT/IT2009/000258
(87) International publication number: WO 2010/143212

(56) References cited:
- EP-A1- 0 582 160
- US-A1- 2008 116 618

## Description

The present invention refers to a method of manufacturing integral monolithic structures made from composite material. More specifically, the invention refers to the manufacture of so-called stiffened panels made from composite material including a skin and a series of stringers having closed shape cross section (omega Ω -shaped or variants thereof) with two opposite longitudinal flanges, which are fixed onto a face of the skin. The invention is intended to be applied in the field of aeronautics, in particular, but not exclusively, for fuselage panels but also wing and tail panels and other applications.

U.S. Patent No. 5,454,895, to one of the same inventors, describes an apparatus and a method for manufacturing a composite box-shaped structure with an upper skin joined to a lower skin through a series of parallel longitudinal spars, each made up by joining two opposite elements with C-shaped section. The method provides plugs that are wrapped with a series of layers: parting films, a closed bag and one or more breather layers. A lower skin layer, made of polymerizable thermosetting material reinforced with fibers (or "composite material"), is positioned on a lower plate of a forming mould; wrapped around the plugs there are the C-shaped elements of the preformed spars made of the same composite material, then positioning the whole thing on the lower skin. An upper skin made from composite material is then applied above the preformed spars, and the upper plate of the forming tool is positioned on top of the upper skin. The whole thing is enclosed in a vacuum bag. During the curing step in an autoclave, pressure is applied to the outer surfaces of the skins (upper and lower) and to the flanges of the spars so as to compact them against the relative plates of the tool, whereas the webs of the spars are compacted by the contiguous inner bags. The plugs thus give shape to the inner tubular bags so that it is as close as possible to the final shape of the cavity that is aimed to be obtained. This is in order to avoid the formation of bridges that could lead to the bag breaking during pressurisation and to create areas with increased radius. In the arrangement disclosed in U.S. Patent No. 5,454,895, the plugs also have the function of constituting a restriction to the deformation of the assembly formed by each of the pairs of contiguous inner tubular bags and by the core of the spars located between them. Indeed, when, through the effect of the temperature, fluidization of the resin occurs and the web of the spar could take up any shape, the walls of the contiguous plugs force the membrane consisting of the contiguous bags and the web of the spar to stay flat. This containing effect by the plugs is only applicable to structural configurations like the one described by the cited patent where a part of the element to be compacted is located between two contiguous plugs.

U.S. Patent Nos. 6,458,309, 6,632,502 and 6,743,504 make use of a hollow mandrel extending longitudinally that is arranged between the cavity of the element to be cured and the inner tubular bag. The mandrel has a trapezium-shaped cross section that serves to maintain the shape of the wall to be cured. In the end product, the walls making contact with the mandrel prove to be porous and not very compacted. The same mandrel, greatly stressed by the pressures in the autoclave, is not very long-lasting and has to be replaced frequently, for which reason the method proves not to be cost-effective.

A primary object of the invention is to achieve an excellent end result in terms of uniform compactness and quality finish of the surfaces of the cured composite material, avoiding the drawbacks of the prior art discussed above. Another object of the invention is to provide a method that also allows composite structures to be made with circular stiffening elements. A further object of the invention is to reduce the production costs connected to the wear of the auxiliary materials or mandrels used in the autoclave.

These and other purposes and advantages, which will be expanded upon hereafter, are accomplished, according to the present invention, by a method as defined in the appended claims.

A few preferred but not limiting embodiments of the invention will now be described; reference is made to the attached drawings, in which:
- figure 1: is a cross section view of a lay-up apparatus for manufacturing a stiffened panel according to a first embodiment of a method according to the invention;
- figure 2: is a longitudinal section view taken along the line II-II in figure 1;
- figure 3: is a diagram of the pressure in an apparatus of the type of that of figure 1;
- figure 4: is a cross section view of a lay-up apparatus for manufacturing a stiffened panel according to a second embodiment of the invention;
- figures 5 and 6: are two schematic views that illustrate, in cross section, two further respective configurations of lay-up tools for implementing the method of the invention; and
- figure 7: is a diagram of the pressures in an apparatus of the type of that of figure 1;

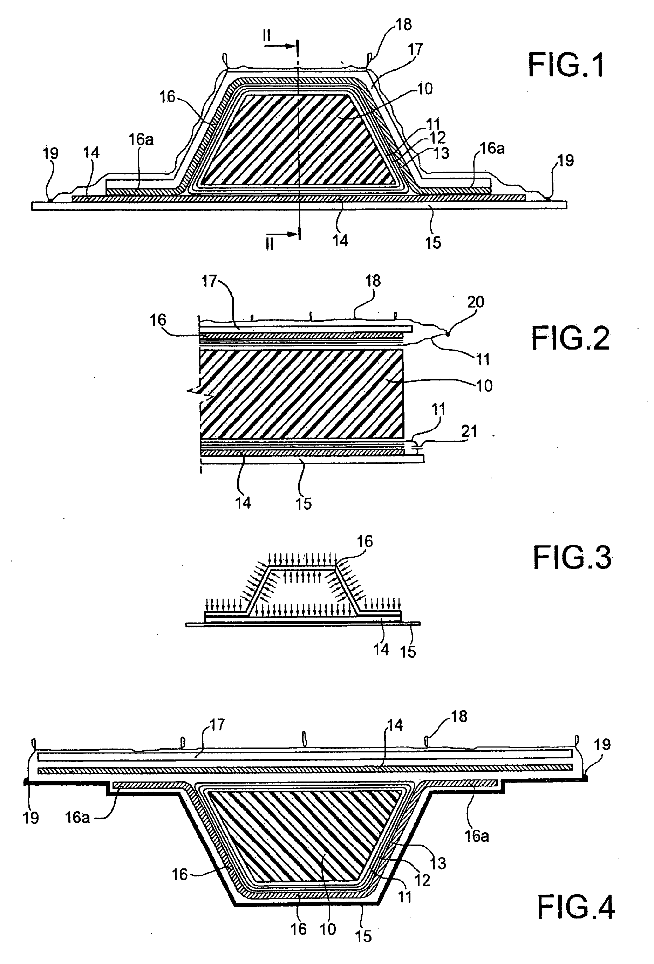

With reference initially to figure 1, reference numeral 10 indicates an inner support, elongated in a direction defined here as longitudinal, having a trapezium ≡shaped cross section. The inner support can be made from any material resistant to the polymerization temperature and can be filled (e.g., with rubber, foam) or hollow with the requirement that it does not squash when the vacuum is applied during the preparation of the support. The support 10 is wrapped with a series of layers, the first of which is an impermeable tubular film bag 11, preferably made from nylon. The bag 11 is neatly closed around the support 10, folding the excess part of the bag 11 longitudinally or lengthwise upon one of the flat faces of the support, far from the corners or radiused zones of the support. The folded flap is fixed with a tape so as to keep the bag 11 adherent to the support 10. A breather layer 12 in form of a tubular bag, preferably made from polyester or fiberglass, is wrapped around the bag 11. Over this there is a tubular separator 13, preferably made from FEP. The tubular separator 13 is sealed at its two ends and the vacuum is applied to it so that the separator 13 tightens against the longitudinal support making the assembly of layers 11, 12 underneath it adhere to the elongate support 10. A coated inner support is thus obtained, having a well-defined geometry corresponding to the internal, concave or hollow shape of the stiffening element that is intended to be compacted.

An uncured layer or skin panel 14 of fiber-reinforced polymerizable thermosetting material ("composite material" or "*prepreg*") is positioned on a lower plate 15 of a mould or rigid apparatus suitable for giving the part its shape.

A coated inner support or a series of them arranged in parallel, according to requirements, is then arranged on the skin panel 14, laying the support or series of supports down on the skin 14. The following description is made exclusively with reference to a single coated support, but it should of course be understood that the method may equally be implemented with a plurality of coated inner supports identical or substantially identical to the one described.

In the example of figure 1, the shape mould 15 is flat. The choice to make a tool flat, just like the use of a trapezium-shaped section constitute choices that may be preferred in some circumstances but are certainly not essential for the purposes of implementing the invention. In particular, it may be carried out with a cylindrical or arched forming tool, to make an arched or circular structural element. Similarly, the desired shape of the cavity can be varied according to specific requirements, with it being clear to those skilled in the art that the inclination of the sides of the trapezium in many cases is actually superfluous or that, instead of a trapezium, it is possible to use any closed shape with rectilinear or curved sides.

A second uncured layer of composite material 16, having a cross section defined here as Ω-shaped (omega-shaped) with a concave portion, is assembled on top of the coated support, applying the side flanges 16a against the skin 14. The Ω-shaped layer 16 serves to define the stringer or stiffening element of the structure or panel.

On top of the layer of composite material 16 a caul plate 17 is applied, which serves to ensure that the composite layer 16 keeps its omega shape during the curing step in an autoclave, as described herein after. For these purposes, the caul plate must be stiff enough to give the stiffening element 16 its shape but also flexible enough to adapt to the variations in geometry and thickness in the areas in which the base fins of the stiffening elements must stick to the skin. Preferably, a suitable thickness is about 2 mm if carboresin is used as material and about 1 mm if invar 36 is used as material. Alternatively, the uncured layer of composite material 16, having Ω-shaped cross section, is previously arranged and/or formed in the Ω-shaped caul plate 17, after which the two elements (16 and 17), fixedly connected to one another, are positioned together on the coated support 10. In accordance with a preferred embodiment of the invention, a slight gap should be provided between the inner side of the caul plate and the nominal outer surface of the cured stiffener. In fact a gap (about 0,5-1 mm wide) allows to place the stiffener without interference and therefore without material deformation, with no detrimental effect on geometrical shape and/or compaction effect at radii/corners. Moreover, the caul plate shall be sized so as to be suitably stiff, using carbon fiber reinforcement at radii, in order to improve the transfer of the autoclave pressure to low pressure areas (i.e. stiffener nodes). Finally, the caul plate edge shall preferably be cut with a tapered angle, ranging between 25° and 35°, in order to avoid on the cured stiffener edge; any fiber deviation and/or panel ply sinking.

Then an outer vacuum bag 18 is applied, which is sealed at the forming tool at 19 and at the inner tubular bag 11 arranged inside each stiffening element.

In its general terms, the sequence of some operative steps of the process according to the invention does not appreciably differ from the operating sequence of the process disclosed by U.S. Patent No. 5,454,895 quoted in the introductory part of the present specification. It suffices here to recall that the open opposite ends of the inner bag are sealed at the outer bag at 20 (figure 2) so as to form a film bag that surrounds the outside of the caul plate and the inside of the inner support. Each inner bag is fitted with a valve 21 (figure 2) to apply the vacuum to the volume between the inner tubular bag and the outer bag. The pressure applied in the autoclave during the polymerization (or "curing") step is uniform and makes the inner bag 11 expand, which will thus tend to detach from the central support 10 and compress the composite material.

The curing step is carried out in an autoclave by applying temperature and pressure in accordance with a programmed cycle indicated by the supplier or manufacturer of the selected composite material being used. For example, a curing cycle for a typical composite material will require an autoclave pressure of about 6 bars, with the temperature rising up to 180°C at a rate of about 1°C/min. The temperature will stay at 180°C for about 2 hours, allowing it then to fall down to 60°C before releasing the pressure.

The breather fabric 12 serves to distribute the vacuum inside the bag 11, since it forms a network of diffuse pathways that allow air to be evacuated thanks to the overall porous consistency. Without it, part of the air that is intended to be sucked up could remain partially trapped between the two smooth surfaces of the bags 11 and 13, forming isolated bubbles. The tubular separator 13 preferably consisting of a layer of *teflon* generally known as release film prevents the layer of nylon 11 from sticking to the composite material.

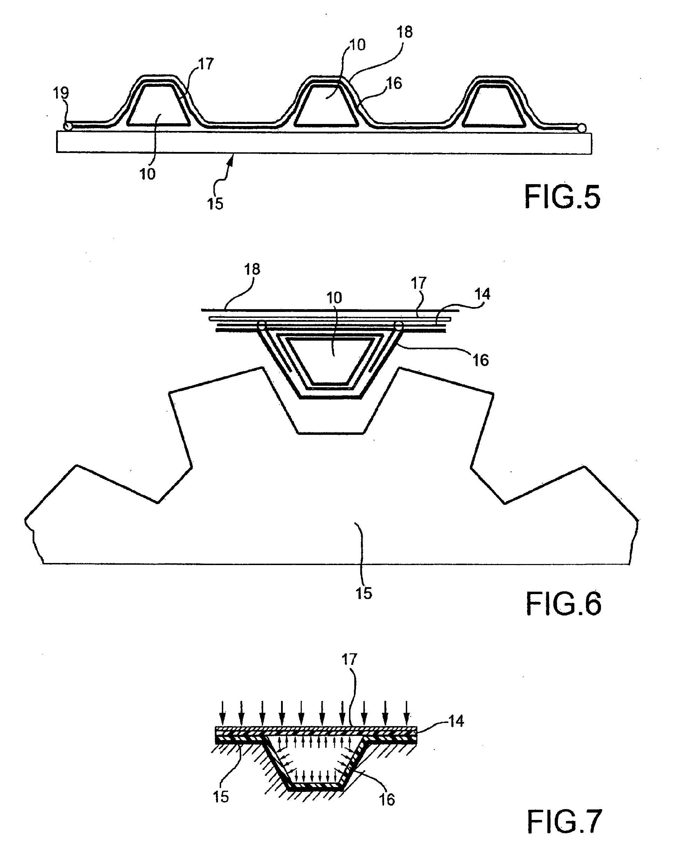

In all of the different embodiments of the method to the invention the stiff tool 15 is on a single side of the structure to be polymerized. In figure 1, the forming mould is arranged on the side of the skin and the caul plate has an Ω shape congruent with that of the stringer; in figure 4, the forming mould is arranged on the side of the stringer and it has its shape whereas the caul plate, on the other hand, is flat and located on the side of the skin panel 14. Figure 3 schematically shows how the pressure is applied with the arrangement of figure 1. Figure 7 schematically shows how the pressure is applied with the arrangement of figure 4.

Similarly to the process of the cited U.S. Patent No. 5,454,895, also in accordance with the present invention the inner supports 10 have the task of controlling the shape of the inner tubular bags 11 so that this shape is as close as possible to the desired final trapezoidal shape of the cavity of the material to be compacted. This is so as to avoid the formation of wrinkles and bridges that could lead to the bag breaking during pressurization and give unacceptable geometries of the spokes.

Unlike the configuration of U.S. Patent No. 5,454,895, the supports inside the bags for adjacent stringers are never contiguous. The problem of containing the membrane instability of the assembly including tubular inner bag / material to be compacted / outer bag is solved by the caul plate that, associated with the aforementioned element, contributes to defining a stratified assembly of stable shape consisting of inner bag, material to be compacted, caul plate and outer bag.

The caul plate 17 has a completely different function to the one conventionally used. Indeed, the "caul plates" conventionally used are inserted in the sequence "rigid apparatus - material to be compacted - outer bag" for the sole purpose of giving a smooth surface to the fresh material on the side of the outer bag. In the present case, on the other hand, the caul plate is a semirigid plate that has the task of
- preventing the membrane instability of the bags and
- supporting the unbalancing forces deriving from the fact that the inner surface of the hollow stringer is slightly smaller than the outer surface. Therefore, in an environment with uniform pressure, a force is generated that tends to squash the stringer from the outside towards the inside.

Therefore, the caul plate must be accurately proportioned since:
- in the areas in which it must prevent membrane instability and withstand the unbalanced forces it must be sufficiently stiff
- in the areas in which it acts as a conventional caul plate, for example on the attachment flanges of the stringers to the skin, it must be flexible enough to adapt to the variations in thickness of the interposed material avoiding porosity defects and delaminations.

In other words, the rigidity of the caul plate must be selected so as to transmit the normal pressure from the environment of the autoclave to the material to be polymerized, whilst still maintaining the desired shape to be given to the stringer, correcting the tendency towards instability of the membranes made from nylon, inner and outer, between which the stringer is packed in a sandwich in a condition of plasticity of the resin at the temperatures usually reached in an autoclave. Preferably, relatively thin caul plates will be used, for example made from metal or carboresin.

As will be appreciated, the absence of an intermediate mandrel allows an end product of composite material to be obtained having compacted surfaces, and the presence of a caul plate between the inner tubular bag and the outer bag ensures the formation of an inner cavity having the desired shape and size.

Although two embodiments of the method process have been described, various modifications can be produced, without departing from the scope of the invention, as defined in the appended claims. For example, the skin can without distinction be fresh or cured in advance. It should also be understood that the number of stringers applied to the same skin portion can vary according to the requirements, as schematically indicated by figures 5 and 6. According to a further variant of the method of this invention, the elongate support 10 may be removed prior to applying temperature and pressure in the autoclave. It will be noted that the support 10 is not enclosed in a space comprised between the outer bag 18 and the inner bag 11. Therefore, if one desires to facilitate the air flow in the autoclave and/or the elongate support 10 is selected to be made out of a material not suitable for withstanding the autoclave temperature, the support 10 may be withdrawn by pulling it out (for example rightwards in figure 2).

## Claims

1. A method of manufacturing stiffened panels made from composite material comprising a skin panel and one or more stringers rigidly applied to a face of the panel, the method comprising the following steps:
a1) providing at least one stringer (16) of fiber reinforced polymerizable thermosetting composite material, having a Ω-shaped cross section with a portion of closed or concave, rectilinear or curvilinear shape, and two opposite side flanges (16a);
a2) providing a panel or skin layer (14) of fiber reinforced polymerizable or polymerized thermosetting composite material;
b) positioning a first of said two elements of composite material (14 or 16) on a surface of a stiff forming tool (15) congruent with a surface of said first element;
c) positioning, on the first element of composite material (14 or 16), an elongated support element (10) that supports a film bag (11), and a breather layer (12) around it, all enclosed by a tubular parting film (13);
d1) laying the second composite element (16 or 14) on the elongated support (10) bringing the side flanges (16a) of the stringer in contact with the skin panel, so as to define a cavity of predetermined cross section between these two composite elements;
d2) providing a caul plate (17) having a profile congruent with the external profile of the second element;
d3) laying the caul plate (17) on the second element (16 or 14);
e) covering the caul plate (17) with an outer film bag (18) sealing it both to the forming tool (15) and at the open opposite ends of the inner bag (11), so as to form a film wrapping which surrounds the outside of the caul plate and which internally is closely wrapped around the inner support (10);
f) applying a vacuum to said film wrapping so as to apply a uniform pressure to the composite material, the bottom part of which rests on the stiff tool (15), while the top part of which is compressed between the outer bag (18) and the tubular inner bag (11) and is stabilized through the caul plate (17), the pressure being transmitted to the composite material without the interposition of intermediate mandrels; and
g) curing in an autoclave through a programmed temperature and pressure application cycle.

2. The method of claim 1, wherein said cavity is trapezium ≡shaped in cross section, with the larger base of the trapezium consisting of the skin panel.

3. The method of claim 1 or 2, wherein the skin panel (14) is cured before being joined to the stringer (16).

4. The method of claim 1 or 2, wherein the skin panel (14) is cured at the same time as the stringer (16).

5. The method of any one of the previous claims, wherein the caul plate (17) is made from carboresin and has a thickness of about 2 mm.

6. The method of any one of claims 1 to 4, wherein the caul plate (17) is made from invar 36 and has a thickness of about 1 mm.

7. The method of any one of the previous claims, wherein step d1) precedes step d3).

8. The method of any one of claims 1 to 6, wherein step d3) precedes step d1).

## Patentansprüche

1. Verfahren zur Herstellung von versteiften, aus Verbundmaterial hergestellten Platten, umfassend eine Außenhaut und einen oder mehrere Längsspanten, die an einer Fläche der Platte starr angebracht sind, wobei das Verfahren die folgenden Schritte umfasst:
a1) das Bereitstellen zumindest eines Längsspants (16) aus faserverstärktem polymerisierbarem Duroplastverbundmaterial, der einen Ω-förmigen Querschnitt mit einem Abschnitt von geschlossener oder konkaver, geradliniger oder krummliniger Form und zwei gegenüberliegende Seitenflansche (16a) aufweist;
a2) das Bereitstellen einer Verkleidungs- oder Außenhautschicht (14) aus faserverstärktem polymerisierbarem oder polymerisiertem Duroplastverbundmaterial;
b) das Positionieren eines ersten dieser beiden Elemente aus Verbundmaterial (14 oder 16) auf einer Oberfläche eines steifen Formwerkzeugs (15), welche mit einer Oberfläche des ersten Elements deckungsgleich ist;
c) das Positionieren eines verlängerten Stützelements (10) auf dem ersten Element aus Verbundmaterial (14 oder 16), wobei das Stützelement einen Foliensack (11) trägt, sowie eine Entlüftungsschicht (12) um diesen herum, wobei all dies von einem schlauchförmigen Trennfilm (13) umschlossen ist;
d1) das Legen des zweiten Verbundelements (16 oder 14) auf die verlängerte Stütze (10), wobei die Seitenflansche (16a) des Längsspants mit der Außenhaut in Kontakt gebracht werden, um einen Hohlraum von vorherbestimmtem Querschnitt zwischen diesen beiden Verbundelementen zu definieren;
d2) das Bereitstellen einer Pressplatte (17), die ein Profil hat, das mit dem Außenprofil des zweiten Elements deckungsgleich ist;
d3) das Legen der Pressplatte (17) auf das zweite Element (16 oder 14);
e) das Bedecken der Pressplatte (17) mit einem äußeren Foliensack (18), wobei beides gegenüber dem Formwerkzeug (15) und an den offenen gegenüberliegenden Enden des inneren Sacks (11) abgedichtet wird, um eine Folienumhüllung zu bilden, welche die Außenseite der Pressplatte umgibt und innen eng um die innere Stütze (10) gewickelt ist;
f) das Aufbringen eines Vakuums auf die Folienumhüllung, um einen gleichmäßigen Druck auf das Verbundmaterial aufzubringen, dessen unterer Teil auf dem steifen Werkzeug (15) aufliegt, während der obere Teil davon zwischen dem äußeren Sack (18) und dem schlauchförmigen inneren Sack (11) zusammengedrückt und durch die Pressplatte (17) stabilisiert wird, wobei der Druck ohne Einfügung von dazwischenliegenden Dornen auf das Verbundmaterial übertragen wird; und
g) das Aushärten in einem Autoklaven durch einen programmierten Temperatur-und Druckanwendungszyklus.

2. Verfahren nach Anspruch 1, wobei der Hohlraum trapezförmig im Querschnitt ist, wobei die größere Grundfläche des Trapezes aus der Außenhaut besteht.

3. Verfahren nach Anspruch 1 oder 2, wobei die Außenhaut (14) gehärtet wird, bevor sie mit dem Längsspant (16) verbunden wird.

4. Verfahren nach Anspruch 1 oder 2, wobei die Außenhaut (14) zur selben Zeit wie der Längsspant (16) gehärtet wird.

5. Verfahren nach einem der vorhergehenden Ansprüche, wobei die Pressplatte (17) aus Kohlenharz gefertigt wird und eine Dicke von etwa 2 mm aufweist.

6. Verfahren nach einem der Ansprüche 1 bis 4, wobei die Pressplatte (17) aus Invar 36 gefertigt wird und eine Dicke von etwa 1 mm aufweist.

7. Verfahren nach einem der vorhergehenden Ansprüche, wobei Schritt d1) Schritt d3) vorausgeht.

8. Verfahren nach einem der Ansprüche 1 bis 6, wobei Schritt d3) Schritt d1) vorausgeht.

## Revendications

1. Procédé de fabrication de panneaux rigidifiés réalisés à partir d'un matériau composite comprenant un panneau de peau et un ou plusieurs longerons appliqués rigidement à une face du panneau, le procédé comprenant les étapes suivantes :
a1) de fourniture d'au moins un longeron (16) en un matériau composite thermodurcissable polymérisable renforcé par fibres, ayant une section en forme de Ω avec une partie de forme fermée ou concave, rectiligne ou curviligne, et deux rebords latéraux opposés (16a) ;
a2) de fourniture d'un panneau ou couche de peau (14) en un matériau composite thermodurcissable polymérisable ou polymérisé renforcé par fibres ;
b) de positionnement d'un premier desdits deux éléments de matériau composite (14 ou 16) sur une surface d'un outil de formage rigide (15) conforme à une surface dudit premier élément ;
c) de positionnement, sur le premier élément de matériau composite (14 ou 16), d'un élément de support allongé (10) qui supporte un sac en film (11), et d'une couche respirante (12) autour de celui-ci, tous étant enfermés par un film de séparation tubulaire (13) ;
d1) de dépôt du deuxième élément composite (16 ou 14) sur le support allongé (10) en amenant les rebords latéraux (16a) du longeron en contact avec le panneau de peau, de manière à définir une cavité de section transversale prédéterminée entre ces deux éléments composites ;
d2) de fourniture d'une plaque de conformation (17) ayant un profil conforme au profil externe du deuxième élément ;
d3) d'agencement de la plaque de conformation (17) sur le deuxième élément (16 ou 14) ;
e) de recouvrement de la plaque de conformation (17) avec un sac en film extérieur (18) en le scellant à la fois à l'outil de formage (15) et au niveau des extrémités opposées ouvertes du sac intérieur (11), de manière à former un enveloppement de film qui entoure l'extérieur de la plaque de conformation et qui est étroitement enroulé intérieurement autour du support intérieur (10) ;
f) d'application d'un vide au dit enveloppement de film de manière à appliquer une pression uniforme au matériau composite, dont la partie inférieure repose sur l'outil rigide (15), alors que la partie supérieure de celui-ci est comprimée entre le sac extérieur (18) et le sac intérieur tubulaire (11) et est stabilisée par l'intermédiaire de la plaque de conformation (17), la pression étant transmise au matériau composite sans l'interposition de mandrins intermédiaires ; et
g) de cuisson dans un autoclave par un cycle d'application de température et de pression programmé.

2. Procédé selon la revendication 1, dans lequel ladite cavité a une forme de trapèze en coupe, la base la plus grande du trapèze consistant en le panneau de peau.

3. Procédé selon la revendication 1 ou 2, dans lequel le panneau de peau (14) est cuit avant d'être joint au longeron (16).

4. Procédé selon la revendication 1 ou 2, dans lequel le panneau de peau (14) est cuit en même temps que le longeron (16).

5. Procédé selon l'une quelconque des revendications précédentes, dans lequel la plaque de conformation (17) est réalisée à partir d'une carborésine et a une épaisseur d'environ 2 mm.

6. Procédé selon l'une quelconque des revendications 1 à 4, dans lequel la plaque de conformation (17) est réalisée à partir d'invar 36 et a une épaisseur d'environ 1 mm.

7. Procédé selon l'une quelconque des revendications précédentes, dans lequel l'étape d1) précède l'étape d3).

8. Procédé selon l'une quelconque des revendications 1 à 6, dans lequel l'étape d3) précède l'étape d1).
